# EUROPÄISCHE PATENTANMELDUNG

(11) **EP 2 181 601 A1**
(43) Veröffentlichungstag der Anmeldung: **05.05.2010**
(21) Anmeldenummer: 09174492.0
(22) Anmeldetag: 29.10.2009
(51) Int. Cl.: A21D 2/36, A21D 8/02, A21D 10/00

(54) **Verfahren zur Herstellung von Backwaren**

(30) Priorität: 30.10.2008 AT 6312008; 16.06.2009 AT 9192009
(71) Anmelder: Pölzelbauer, Denise, 2823 Brunn/Pitten (AT)
(72) Erfinder: Pölzelbauer, Denise, 2823 Brunn/Pitten (AT)
(74) Vertreter: KLIMENT & HENHAPEL

(57) **Zusammenfassung**

Verfahren zur Herstellung von Backwaren, bei dem zur Herstellung eines backfertigen Teiges Zusätze vermengt werden, wobei erfindungsgemäß vorgesehen ist, dass zumindest fünf Zusätze in zeitlichem Abstand voneinander beigemengt werden, die jeweils einer sauren, bitteren, süßen, scharfen und salzigen Geschmackskomponente zuordenbar sind, wobei für jede der genannten Geschmackskomponenten zumindest ein Zusatz beigemengt wird, und nach jeder Beimengung eines der zumindest fünf Zusätze ein Rühr- oder Knetvorgang von zumindest 20 Sekunden stattfindet.

## Beschreibung

Die Erfindung betrifft ein Verfahren zur Herstellung von Backwaren, bei dem zur Herstellung eines backfertigen Teiges Zusätze vermengt werden, gemäß dem Oberbegriff von Anspruch 1.

Der backfertige Teig umfasst zunächst Grundzutaten wie Mehl, Wasser und ein Triebmittel wie etwa Hefe, sowie in der Regel weitere Zutaten wie Quellstärken, Hydrokolloide, Emulgatoren, Phosphate, Ascorbinsäure, oder Milchpulver. Für unterschiedliche Sorten von Backwaren kann in weiterer Folge eine Vielzahl unterschiedlicher Zusätze verwendet werden, wie Nüsse und Samen, getrocknete Früchte, Gewürze und vieles mehr. Durch Beimengung unterschiedlicher Zusätze in variierenden Kombinationen wird einerseits versucht, geschmackliche Verfeinerungen zu erzielen, und andererseits dem Wunsch des Konsumenten nach stets neuen Produkten zu entsprechen. Der Vielfalt an möglichen Zusätzen sind an sich kaum Grenzen gesetzt, und so sind Backwaren bekannt, denen etwa so unterschiedliche Zusätze wie Grünkern, Granatapfel, Kumquat, Champagner, Zitronengras, Grüner Tee, Brennessel, Tofu, Reismilch, Chilli, Radieschen, Parmesankäse, oder diverse Algensorten beigemengt wurden.

Die Bemengung dieser Zusätze ist allerdings nicht unproblematisch, da durch ungünstige Kombinationen die Haltbarkeit der Backware, insbesondere auch die geschmackliche Haltbarkeit, stark reduziert werden kann. Die Backware an sich, also ohne sonstige Zusätze, besteht in chemischer Hinsicht im Wesentlichen aus Kohlenhydraten, Proteinen, den im Mehl enthaltenen Ballaststoffen, im Wesentlichen Zellulose, sowie Wasser, und verfügt bei richtiger Lagerung über eine Haltbarkeit von mehreren Tagen. Durch den Verlust an Feuchtigkeit wird die Backware zwar zunehmend härter, die geschmackliche Qualität nimmt aber kaum ab, bis auf jene geschmacklichen Beeinträchtigungen, die auf Modifikationen der Kohlenhydrat- und Proteinketten zurückzuführen sind.

Durch die Beimengung von Zusätzen wird die Haltbarkeit in der Regel entscheidend beeinträchtigt, so werden Backwaren mit mehreren Zusätzen in der Regel bereits innerhalb von 24 Stunden hart und geschmacklich deutlich beeinträchtigt. So wird etwa vermutet, dass säurehaltige Zusätze, etwa durch die Beimengung von säurehältigen Früchten wie Äpfel, Orangen, oder Stachelbeere, die Kohlenhydrat- und Proteinketten der Backware modifizieren und zur verminderten Haltbarkeit beitragen. Aber auch zwischen den Inhaltsstoffen unterschiedlicher Zusätze können sich in chemischer Hinsicht für die Haltbarkeit der Backware ungünstige Kombinationen einstellen, etwa wenn Monosaccharide, wie sie in Zusätzen wie fruktosehältigen Früchten enthalten sind, mit Alkaloiden, wie sie etwa in verwendeten Zusätzen wie Oregano, Paprika oder auch Grüner Tee enthalten sind, oder säurehaltigen Zusätzen, wie etwa neben den bereits erwähnten, säurehaltigen Früchten, aber auch Sauerrahm oder Sauermilch, vermengt und im Zuge des Backvorgangs erhitzt werden.

Des Weiteren ist bekannt, dass in unterschiedlichen Teigen die Entwicklung gewünschter Mikroorganismen, etwa der Hefe oder von Milchsäurebakterien, unterschiedlich rasch vonstatten geht. Bei schweren, fetthaltigen Teigen etwa wird unter Verwendung eines Vorteigs zunächst deren Vermehrung gefördert, damit sie sich unter den nachteiligen Bedingungen besser entwickeln können. Es kann daher vermutet werden, dass die Entwicklung gewünschter Mikroorganismen auch durch die Beimengung unterschiedlicher Zusätze beeinträchtigt oder gefördert, und somit die Haltbarkeit und Bekömmlichkeit der Backware beeinflusst werden kann.

Eine Kategorisierung unterschiedlicher Zusätze zur Identifizierung von, hinsichtlich der Haltbarkeit der Backware günstigen Kombinationen von Zusätzen aufgrund einer Analyse der chemischen Bestandteile erscheint aufgrund der komplexen chemischen Zusammensetzung von möglichen Zusätzen aussichtslos, und aufgrund der Vielzahl möglicher Zusätze auch unpraktikabel, sodass ein solcher Versuch bislang nicht unternommen wurde.

Es ist dennoch das Ziel der Erfindung, ein Verfahren zur Herstellung von Backwaren so zu optimieren, dass insbesondere bei Verwendung einer Mehrzahl an unterschiedlichen Zusätzen die Haltbarkeit der Backware nicht beeinträchtigt bzw. verbessert wird. Die Verfahrensmerkmale sollen dabei in der Praxis leicht anwendbar sein, damit sie auch in kleineren Produktionsbetrieben und ohne chemisches Fachwissen leicht umsetzbar sind. Die Erfindung soll des Weiteren für den gewerblichen Bereich einsetzbar sein, und insbesondere die Herstellung größerer Mengen an Backwaren in vertretbarer Zeit gestatten.

Diese Ziele werden durch die Merkmale von Anspruch 1 erreicht. Anspruch 1 bezieht sich dabei auf ein Verfahren zur Herstellung von Backwaren, bei dem zur Herstellung eines backfertigen Teiges Zusätze vermengt werden, wobei erfindungsgemäß vorgesehen ist, dass zumindest fünf Zusätze in zeitlichem Abstand voneinander beigemengt werden, die jeweils einer sauren, bitteren, süßen, scharfen und salzigen Geschmackskomponente zuordenbar sind, wobei für jede der genannten Geschmackskomponenten zumindest ein Zusatz beigemengt wird, und nach jeder Beimengung eines der zumindest fünf Zusätze ein Rühr- oder Knetvorgang von zumindest 20 Sekunden stattfindet. Die Anmelderin hat nämlich durch eine Vielzahl an Versuchen festgestellt, dass durch eine solche Ausgewogenheit an Zusätzen auch die Haltbarkeit und die Bekömmlichkeit der Backware erhöht werden kann. Offensichtlich kann durch diese vergleichsweise einfache Vorgangsweise eine Neutralisation bzw. Ergänzung der in den unterschiedlichen Zusätzen enthaltenen Inhaltsstoffe, etwa der in sauren Zusätzen enthaltenen Säuren, mit den in bitteren Zusätzen enthaltenen, alkalischen Bitterstoffen, oder den in süßen Zusätzen enthaltenen Monosacchariden, erreicht werden. Dass erfindungsgemäß auch ein Zusatz mit scharfer Geschmackskomponente beizufügen ist, überrascht, da die Geschmacksrichtung "scharf" an sich nicht existiert. Offenbar stellen die in scharfen Inhaltsstoffen enthaltenen Capsaicinoide eine vorteilhafte Ergänzung, etwa zu den in süßen Zusätzen enthaltenen Mono- und Disacchariden, dar. Dabei zählen auch die Grundzutaten zur Herstellung eines backfertigen Teigs, also Mehl, Wasser, Triebmittel usw., zu den anspruchsgemäßen Zusätzen.

Gemäß einer vorteilhaften Weiterbildung der Erfindung wird bei beliebiger Wahl der ersten Geschmackskomponente nach zumindest einer sauren zumindest eine bittere Geschmackskomponente, nach zumindest einer bitteren zumindest eine süße Geschmackskomponente, nach zumindest einer süßen zumindest eine scharfe Geschmackskomponente, nach zumindest einer scharfen zumindest eine salzige Geschmackskomponente, und nach zumindest einer salzigen zumindest eine saure Geschmackskomponente beigemengt, wobei diese Abfolge beibehalten wird, bis für jede der genannten Geschmackskomponenten zumindest ein Zusatz beigemengt wurde. Dabei ist, wie erwähnt, nicht entscheidend, mit welcher Geschmackskomponente begonnen wird, solange erfindungsgemäß zumindest fünf der oben genannten Zusätze beigefügt werden. Eine solche Abfolge der Beimengung der unterschiedlichen Zusätze hat sich als besonders vorteilhaft hinsichtlich einer Verlängerung der Haltbarkeit erwiesen. Offensichtlich sind Gemenge an schwachen Säuren und den schwach basischen Alkaloiden, Glykosiden und Isoprenoiden der Bitterstoffe, sowie von letzteren mit den Mono- und Disacchariden süßer Zusätze, sowie von letzteren mit den Capsaicinoiden scharfer Zusätze und von letzteren mit den Natriumchlorid-, Magnesiumchlorid- und Magnesiumsulfathältigen Zusätzen salziger Zusätze besonders verträglich und förderlich für die Haltbarkeit und Bekömmlichkeit der Backware.

Die konkrete Auswahl der jeweiligen Zusätze wird sich in erster Linie anhand geschmacklicher Kriterien orientieren. Erfindungsgemäß haben sich hinsichtlich einer längeren Haltbarkeit der Backwaren besonders folgende Gruppen an Zusätzen empfohlen:

Der Zusatz mit saurer Geschmackskomponente kann in vorteilhafter Weise ausgewählt werden aus der Gruppe bestehend aus Grünkern, Granatapfel, Kumquat, Pflaume, Huhn, Essig, Petersilie, Kirschsaft, Bulgur, Couscous, Dinkel, Brombeere, Himbeere, Hefe, Hagebuttentee, Weizen, Alfaalfasprossen, Hülsenfrüchtesprossen, Kapuzinerkresse, Sauerkraut, Sojasprossen, Apfel, Clementine, Erdbeere, Heidelbeere, Johannisbeere, Kirsche sauer, Mandarine, Orange, Preiselbeere, Stachelbeere, Dickmilch, Frischkäse, Sauerteig, Kefir, Quark, Sauermilch, Sauerrahm, Brottrunk, Champagner, Hibiskustee, Malventee, Melissentee, Prosecco, Sekt, Weißwein, Weizenbier, Weizenkleie, Weizensprossen, Mungbohnensprossen, Sauerampfer, Tomate, Ananas, Kiwi, Rhabarber, Zitrone, Joghurt, Limettenpulver, Traubenkernmehl und Zitronengras.

Der Zusatz mit bitterer Geschmackskomponente kann in vorteilhafter Weise ausgewählt werden aus der Gruppe bestehend aus Bitterlikör, Cognac, Glühwein, Rosenkohl, Schafskäse, Ziegenkäse, Ziegenmilch, Basilikum, Bochshornkleesamenpulver, Bohnenkraut, Kakao, Kurkuma, Mohn, Oregano, Rosenpaprika, Rosmarin, Thymian, Wacholderbeere, Getreidekaffee, Kaffee, Rotwein, Amaranth, Quinoa, Roggen, Brennessel, Eisbergsalat, Endiviensalat, Feldsalat, Rote Bete, Bancha-Tee, Pu-Erh-Tee, Schwarzer Tee, Tuo-Cha-Tee, Buchweizen, Artischocke, Chicorèe, Kopfsalat, Löwenzahn, Pastinake, Radicchio, Rucola, Holunderbeere, Pampelmuse, Quitte, Salbei, Altbier, Grüner Tee und Pils.

Der Zusatz mit süßer Geschmackskomponente kann in vorteilhafter Weise ausgewählt werden aus der Gruppe bestehend aus Süßreis, Fenchel, Hokkaidokürbis, Süßkartoffel, Zwiebel gebraten, Aprikose, Kirsche süß, Korinthe, Pfirsich, Rosine, Sultanine, Kürbiskernöl, Rapsöl, Sojaöl, Zimt, Erdnuss, Kokosnuss, Pinienkern, Walnuss, Kastanie, Kokosmilch, Fencheltee, Honigwein, Likör, Portwein, Hirse, Maiskolben, Polenta, grüne Bohnen, Erbsen, Flaschenkürbis, Karotte, Kartoffel, Kohlrabi, Kürbis, Rotkohl, Steckrübe, Weißkohl, Wirsingkohl, Yamswurzel, Dattel, Feige, Pflaume, Rind, Butter, Kuhmilch, Safran, Vanille, Honig, Malz (alle Sorten), Melasse, Vollrohrzucker, Haselnuss, Kürbiskern, Mandel, Pistazie, Sesam, Sonnenblumenkern, Austernpilz, Ei, Shitakepilz, Waldpilz, Süßholztee, Traubensaft rot/weiß, Gerste, Aubergine, Blumenkohl, Broccoli, Chinakohl, Mangold, Paprika, Schwarzwurzel, Sellerieknolle, Selleriestange, Spargel, Spinat, Zucchini, Apfel süß, Banane, Birne, Weintraube rot/weiß, Sojamilch, Tofu, Sahne süß, Leinöl, Olivenöl, Sesamöl, Sonnenblumenöl, Weizenkeimöl, Estragon, Fabrikzucker, Sirup (alle Sorten), Cashewkern, Avocado, Champignon, Kuzu, Pfeilwurzelmehl, Apfelsaft, Birnensaft, Maishaartee, Orangenblütentee, Salatgurke, Honigmelone, Kaki, Mango, Papaya, Wassermelone, Ghee, Schweineschmalz, Pfirsich, Sesam und Reismilch.

Der Zusatz mit scharfer Geschmackskomponente kann in vorteilhafter Weise ausgewählt werden aus der Gruppe bestehend aus Schimmelkäse, Cayennepfeffer, Chillipulver, Chillischote, Chilli crushed, Curry, Ingwer, Knoblauch, Pfeffer, Piment, Alkohol hochprozentig, Yogi Tee, Hafer, Frühlingszwiebel, Lauch, Meerrettich, Zwiebel roh, Harzer Käse, Münster Käse, Reiswein (Sake), Basilikum, Beifuß, Bohnenkraut, Cumin, Dill, Estragon, Kardamom, Koriander, Koriandersamen, Kümmel, Liebstöckel, Lorbeer, Majoran, Masala, Muskat, Nelke, Oregano, Rosmarin, Schnittlauch, Senf, Sternanis, Thymian, Reis, Rettich schwarz, Kresse, Radieschen, Radischensprossen, Rettich weiß, Salbei, Pfefferminztee, Tandoori Masala, Garam Masala, Currypaste und Tandooripaste.

Der Zusatz mit salziger Geschmackskomponente kann schließlich in vorteilhafter Weise ausgewählt werden aus der Gruppe bestehend aus Parmesankäse, Adukibohne, Erbse, Linse, Saubohne, Sojabohne, Miso, Kichererbse, Mungbohne, Mu-Erh-Pilz, Olive, Umeboshi-Pflaume, Hijikialge, Kombualge, Norialge, Wakamealge, Kaviar, Salz alle Sorten, Sojasoße, Agar-Agar, Wasser, Mineralwasser und schwarzer Sesam.

Interessanter Weise zeigt sich, dass eine ähnliche, fünfteilige Kategorisierung von Lebensmittel auch aus der Ernährungstheorie der "5 Elemente" bekannt ist, wenngleich deren Anwendung auf die Herstellung von Backwaren im gewerblichen Bereich bislang nicht beschrieben wurde, und auch die Vereinigung entsprechender Zusätze für die Herstellung eines einzigen Produkts, etwa einer Backware, bislang nicht versucht wurde. Es sind zwar Anwendungen im Haushaltsbereich bekannt, wo bei der Herstellung eines backfertigen Teigs auf eine Ausgewogenheit von Teigbestandteilen geachtet wird, (siehe TEMELIE, B. et al. Das Fünf Elemente Kochbuch, Joy Verlag GmbH, Sulzberg, DE, 2005), allerdings erfolgt hier keine Beimengung der zumindest fünf Zusätze *in zeitlichem Abstand voneinander.* Stattdessen wir lediglich beschrieben, dass eine Vermengung von unterschiedlichen Teigbestandteilen zu erfolgen hätte, deren Vermengung aber im Wesentlichen gleichzeitig erfolgt. Bei gewerblichen Anwendungen sind des Weiteren die zu verarbeitenden Mengen ungleich höher als im Hauhaltsbereich, sodass auch auf eine ausreichende Durchmischung der Zusätze zu achten ist. Erfindungsgemäß wird hierzu festgelegt, dass nach jeder Beimengung eines der zumindest fünf Zusätze ein Rühr- oder Knetvorgang von zumindest 20 Sekunden stattfindet. Das Problem der ausreichenden Durchmischung von, in zeitlichem Abstand beigemengten Zusätzen ist im Stand der Technik weder beschrieben, noch wurde hierfür eine geeignete Verfahrensweise vorgeschlagen.

Die praktische Erfahrung zeigt jedenfalls, dass durch Anwendung des erfindungsgemäßen Verfahrens zur Herstellung von Backwaren bei Verwendung einer Mehrzahl an unterschiedlichen Zusätzen die Haltbarkeit der Backware verbessert werden kann. Die erfindungsgemäßen Verfahrensmerkmale sind dabei in der Praxis leicht anwendbar, da auch bei Auswahl anderer Zusätze als der konkreten, oben beschriebenen Zusätze leicht eine Zuordnung zu einer der genannten, elementaren Geschmackskomponenten getroffen, und in weiterer Folge gemäß der erfindungsgemäßen Verfahrensmerkmale vorgegangen werden kann. Somit ist das erfindungsgemäße Verfahren auch in kleineren Produktionsbetrieben und ohne chemisches Fachwissen leicht umsetzbar.

## Patentansprüche

1. Verfahren zur Herstellung von Backwaren, bei dem zur Herstellung eines backfertigen Teiges Zusätze vermengt werden, **dadurch gekennzeichnet, dass** zumindest fünf Zusätze in zeitlichem Abstand voneinander beigemengt werden, die jeweils einer sauren, bitteren, süßen, scharfen und salzigen Geschmackskomponente zuordenbar sind, wobei für jede der genannten Geschmackskomponenten zumindest ein Zusatz beigemengt wird, und nach jeder Beimengung eines der zumindest fünf Zusätze ein Rühr- oder Knetvorgang von zumindest 20 Sekunden stattfindet.

2. Verfahren zur Herstellung von Backwaren nach Anspruch 1, **dadurch gekennzeichnet, dass** bei beliebiger Wahl der ersten Geschmackskomponente nach zumindest einer sauren zumindest eine bittere Geschmackskomponente, nach zumindest einer bitteren zumindest eine süße Geschmackskomponente, nach zumindest einer süßen zumindest eine scharfe Geschmackskomponente, nach zumindest einer scharfen zumindest eine salzige Geschmackskomponente, und nach zumindest einer salzigen zumindest eine saure Geschmackskomponente beigemengt wird, wobei diese Abfolge beibehalten wird, bis für jede der genannten Geschmackskomponenten zumindest ein Zusatz beigemengt wurde.

3. Verfahren nach Anspruch 1 oder 2, **dadurch gekennzeichnet, dass** der Zusatz mit saurer Geschmackskomponente ausgewählt ist aus der Gruppe bestehend aus Grünkern, Granatapfel, Kumquat, Pflaume, Huhn, Essig, Petersilie, Kirschsaft, Bulgur, Couscous, Dinkel, Brombeere, Himbeere, Hefe, Hagebuttentee, Weizen, Alfaalfasprossen, Hülsenfrüchtesprossen, Kapuzinerkresse, Sauerkraut, Sojasprossen, Apfel, Clementine, Erdbeere, Heidelbeere, Johannisbeere, Kirsche sauer, Mandarine, Orange, Preiselbeere, Stachelbeere, Dickmilch, Frischkäse, Sauerteig, Kefir, Quark, Sauermilch, Sauerrahm, Brottrunk, Champagner, Hibiskustee, Malventee, Melissentee, Prosecco, Sekt, Weißwein, Weizenbier, Weizenkleie, Weizensprossen, Mungbohnensprossen, Sauerampfer, Tomate, Ananas, Kiwi, Rhabarber, Zitrone, Joghurt, Limettenpulver, Traubenkernmehl und Zitronengras.

4. Verfahren nach einem der Ansprüche 1 bis 3, **dadurch gekennzeichnet, dass** der Zusatz mit bitterer Geschmackskomponente ausgewählt ist aus der Gruppe bestehend aus Bitterlikör, Cognac, Glühwein, Rosenkohl, Schafskäse, Ziegenkäse, Ziegenmilch, Basilikum, Bochshornkleesamenpulver, Bohnenkraut, Kakao, Kurkuma, Mohn, Oregano, Rosenpaprika, Rosmarin, Thymian, Wacholderbeere, Getreidekaffee, Kaffee, Rotwein, Amaranth, Quinoa, Roggen, Brennessel, Eisbergsalat, Endiviensalat, Feldsalat, Rote Bete, Bancha-Tee, Pu-Erh-Tee, Schwarzer Tee, Tuo-Cha-Tee, Buchweizen, Artischocke, Chicorèe, Kopfsalat, Löwenzahn, Pastinake, Radicchio, Rucola, Holunderbeere, Pampelmuse, Quitte, Salbei, Altbier, Grüner Tee und Pils.

5. Verfahren nach einem der Ansprüche 1 bis 4, **dadurch gekennzeichnet, dass** der Zusatz mit süßer Geschmackskomponente ausgewählt ist aus der Gruppe bestehend aus Süßreis, Fenchel, Hokkaidokürbis, Süßkartoffel, Zwiebel gebraten, Aprikose, Kirsche süß, Korinthe, Pfirsich, Rosine, Sultanine, Kürbiskernöl, Rapsöl, Sojaöl, Zimt, Erdnuss, Kokosnuss, Pinienkern, Walnuss, Kastanie, Kokosmilch, Fencheltee, Honigwein, Likör, Portwein, Hirse, Maiskolben, Polenta, grüne Bohnen, Erbse, Flaschenkürbis, Karotte, Kartoffel, Kohlrabi, Kürbis, Rotkohl, Steckrübe, Weißkohl, Wirsingkohl, Yamswurzel, Dattel, Feige, Pflaume, Rind, Butter, Kuhmilch, Safran, Vanille, Honig, Malz (alle Sorten), Melasse, Vollrohrzucker, Haselnuss, Kürbiskern, Mandel, Pistazie, Sesam, Sonnenblumenkern, Austernpilz, Ei, Shitakepilz, Waldpilz, Süßholztee, Traubensaft rot/weiß, Gerste, Aubergine, Blumenkohl, Broccoli, Chinakohl, Mangold, Paprika, Schwarzwurzel, Sellerieknolle, Selleriestange, Spargel, Spinat, Zucchini, Apfel süß, Banane, Birne, Weintraube rot/weiß, Sojamilch, Tofu, Sahne süß, Leinöl, Olivenöl, Sesamöl, Sonnenblumenöl, Weizenkeimöl, Estragon, Fabrikzucker, Sirup (alle Sorten), Cashewkern, Avocado, Champignon, Kuzu, Pfeilwurzelmehl, Apfelsaft, Birnensaft, Maishaartee, Orangenblütentee, Salatgurke, Honigmelone, Kaki, Mango, Papaya, Wassermelone, Ghee, Schweineschmalz, Pfirsich, Sesam und Reismilch.

6. Verfahren nach einem der Ansprüche 1 bis 5, **dadurch gekennzeichnet, dass** der Zusatz mit scharfer Geschmackskomponente ausgewählt ist aus der Gruppe bestehend aus Schimmelkäse, Cayennepfeffer, Chillipulver, Chillischote, Chilli crushed, Curry, Ingwer, Knoblauch, Pfeffer, Piment, Alkohol hochprozentig, Yogi Tee, Hafer, Frühlingszwiebel, Lauch, Meerrettich, Zwiebel roh, Harzer Käse, Münster Käse, Reiswein (Sake), Basilikum, Beifuß, Bohnenkraut, Cumin, Dill, Estragon, Kardamom, Koriander, Koriandersamen, Kümmel, Liebstöckel, Loorbeer, Majoran, Masala, Muskat, Nelke, Oregano, Rosmarin, Schnittlauch, Senf, Sternanis, Thymian, Reis, Rettich schwarz, Kresse, Radieschen, Radischensprossen, Rettich weiß, Salbei, Pfefferminztee, Tandoori Masala, Garam Masala, Currypaste und Tandooripaste.

7. Verfahren nach einem der Ansprüche 1 bis 6, **dadurch gekennzeichnet, dass** der Zusatz mit scharfer Geschmackskomponente ausgewählt ist aus der Gruppe bestehend aus Parmesankäse, Adukibohne, Erbse, Linse, Saubohne, Sojabohne, Miso, Kichererbse, Mungbohne, Mu-Erh-Pilz, Olive, Umeboshi-Pflaume, Hijikialge, Kombualge, Norialge, Wakamealge, Kaviar, Salz alle Sorten, Sojasoße, Agar-Agar, Wasser, Mineralwasser und schwarzer Sesam.

8. Backwaren, hergestellt nach einem Verfahren gemäß einem der Ansprüche 1 bis 7.
